(19) Europäisches Patentamt
European Patent Office
Office européen des brevets

(11) Veröffentlichungsnummer: **0 445 395 A2**

(12) **EUROPÄISCHE PATENTANMELDUNG**

(21) Anmeldenummer: **90123932.7**

(51) Int. Cl.⁵: **C09J 11/08**, C08L 83/12

(22) Anmeldetag: **12.12.90**

(30) Priorität: **03.03.90 DE 4006766**

(43) Veröffentlichungstag der Anmeldung: **11.09.91 Patentblatt 91/37**

(84) Benannte Vertragsstaaten: **CH DE ES FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Simon, Ulrich**
**Hügelstrasse 25**
**W-4690 Herne 1(DE)**
Erfinder: **Scholten, Heinz, Dr.**
**Rehwinkel 3**
**W-4358 Haltern(DE)**

(54) **Schmelzkleberpaste und ihre Verwendung.**

(57) Die durch Beschichtung mit den Schmelzkleberpasten des Standes der Technik erhaltenen textilen Fixiereinlagen zeigen bei der Verklebung mit den Oberstoffen nicht immer eine ausreichende Rückschlagfestigkeit. Dieser Mangel wird durch die Schmelzkleberpasten der Erfindung, welche ein Silikontensid aus der Gruppe der organomodifizierten Polymethylsiloxane enthalten, behoben.

EP 0 445 395 A2

Der Gegenstand der Anmeldung betrifft eine Schmelzkleberpaste und ihre Verwendung zur Herstellung von textilen Fixiereinlagen nach dem Pastenpunktverfahren.

In der Bekleidungsindustrie werden textile Fixiereinlagen, d. h. mit Schmelzkleber beschichtete Einlagestoffe, -vliese und -gewirke, mit Oberstoffen verklebt, d. h. fixiert. Dazu bedient man sich als Schmelzkleber geeigneter Thermoplaste, die punktförmig auf die textilen Einlagen aufgetragen werden. Die zugeschnittenen Fixiereinlagen und zugeschnittenen Teile der Oberstoffe werden in Fixieranlagen unter der Einwirkung von Hitze und Druck miteinander zu einem Laminat verklebt. Im wesentlichen gibt es zwei Beschichtungstechniken. Beim Pulverpunktverfahren wird Schmelzkleberpulver aus den Vertiefungen gravierter Druckwalzen auf die textilen Einlagen übertragen. Beim Pastenpunktverfahren wird eine Schmelzkleberpaste, d. h. in Wasser dispergiertes Schmelzkleberpulver, mittels Siebdruckschablonen auf die textilen Einlagen übertragen und die Beschichtung in einem Ofen getrocknet und gesintert.

Für die Auswahl der Thermoplaste gelten die folgenden Kriterien.

1. Sie schmelzen zwischen 80 und 140 °C ohne Zersetzung.
2. Sie lassen sich zu nicht blockenden und rieselfähigen Pulvern verarbeiten.
3. Die Verklebungen sind in der chemischen Reinigung und in der Wäsche beständig.

Geeignete Thermoplaste sind Copolyamide, Polyethylene, Copolyester und Vinylchlorid-Copolymere (Peter Sroka, Handbuch der textilen Fixiereinlagen, 2. Auflage (1983), SINUS-Verlag, Krefeld, Seite 95 ff.).

Die Beschichtungen sollen unter den Bedingungen der Fixierung eine hinreichende Durchschlagfestigkeit und eine hinreichende Rückschlagfestigkeit aufweisen. Unter Rückschlag versteht man das Wegschlagen des Schmelzklebers in die textile Fixiereinlage. Unter Durchschlag versteht man das Durchdringen des Oberstoffs. Rückschlag und Durchschlag werden durch eine zu hohe Temperatur und/oder einen zu hohen Druck beim Fixieren verursacht. Die nachteiligen Folgen sind eine zu geringe Haftung im Laminat, da ein Teil des Schmelzklebers der Klebfuge verloren geht, sowie ein harter Griff. Da die textilen Fixiereinlagen im Zuge der technischen Entwicklung immer dünner und leichter wurden, wurde der Rückschlag zu einem Problem, und zwar sowohl beim Pulverpunktverfahren als auch beim Pastenpunktverfahren. Das Problem wurde noch dadurch verstärkt, daß man aus Kostengründen dazu überging, im sogenannten Sandwich-Verfahren textile Fixiereinlagen und Oberstoffe zu mehrschichtigen Gebilden aufeinanderzulegen und zu fixieren, so daß in einem Arbeitsgang zwei Laminate entstehen. Bei dieser Arbeitsweise bewirkt ein Rückschlag des Schmelzklebers, daß es an der unbeschichteten Rückseite der textilen Fixiereinlage zu einer unerwünschten Verklebung kommt. Der Rückschlag wird bestimmt, indem man zwei textile Fixiereinlagen mit zwei Oberstoffen im Stapel gleichzeitig verklebt, wobei die unbeschichteten Seiten der beiden textilen Fixiereinlagen aufeinanderliegen (Innensandwich), und man nach dem Erkalten die Trennkraft zwischen den beiden Einlagen bestimmt.

Der Rückschlag ist besonders problematisch bei der Verarbeitung von Schmelzkleberpasten im Pastenpunktverfahren. Dies ist darin begründet, daß die Schmelzkleberpaste außer dem pulverförmigen Thermoplasten und Wasser eine Vielzahl von Hilfsmitteln enthält, von denen einige die Schmelzviskosität des Thermoplasten herabsetzen. Dieser Effekt ist erwünscht, da er ein verbessertes Benetzungsvermögen der Schmelzkleberpaste gegenüber den Fasern des Oberstoffes nach sich zieht und dadurch die Haftung im Laminat erhöht. Man wirkt der Rückschlagsneigung einer Beschichtung dadurch entgegen, daß man Gemische aus hochviskosen und weniger hochviskosen Thermoplasten, beispielsweise Gemische aus hochviskosen Polyamiden und weniger hochviskosen Polyestern, verwendet und dafür sorgt, daß die vorher in orientierenden Versuchen ermittelten, optimalen Fixierbedingungen exakt eingehalten werden. Letzteres entzieht sich allerdings dem Einfluß des Herstellers von textilen Fixiereinlagen, weil die Fixierung in der Bekleidungsindustrie erfolgt.

Die Aufgabe der Erfindung besteht darin, eine Schmelzkleberpaste bereitzustellen, mit welcher textile Fixiereinlagen nach dem Pastenpunktverfahren hergestellt werden können, welche bei der weiteren Verarbeitung eine verbesserte Rückschlagfestigkeit aufweisen. Auf diese Weise soll der Ausschuß bei der Herstellung der Laminate durch Fixierung im Sandwich-Verfahren vermindert werden.

Die Aufgabe wurde mit der in den Patentansprüchen angegebenen Schmelzkleberpaste gelöst.

Die Schmelzkleberpaste der Erfindung besteht somit aus einem pulverförmigen, für Schmelzkleberpasten geeigneten Thermoplasten, Wasser und üblichen Hilfsmitteln, sowie, bezogen auf den Thermoplasten, 0,5 bis 10, vorzugsweise 1 bis 6 Massen-% eines bei Raumtemperatur wasserlöslichen oder in Wasser dispergierbaren Silikontensids aus der Gruppe der organomodifizierten Polymethylsiloxane.

Eine bevorzugte Schmelzkleberpaste enthält als Silikontensid ein nichtionisches Polymethylsiloxan, das wenigstens eine, auf Ethylenoxid oder Ethylenoxid/Propylenoxid basierende Polyethergruppe aufweist. Das nichtionische Polymethylsiloxan weist im allgemeinen eine Oberflächenspannung (1 Massen-% in $H_2O$) im Bereich von 21 bis 30 $mN \cdot m^{-1}$ auf. Es ist vorzugsweise bei Raumtemperatur wasserlöslich und entspricht der allgemeinen Formel I.

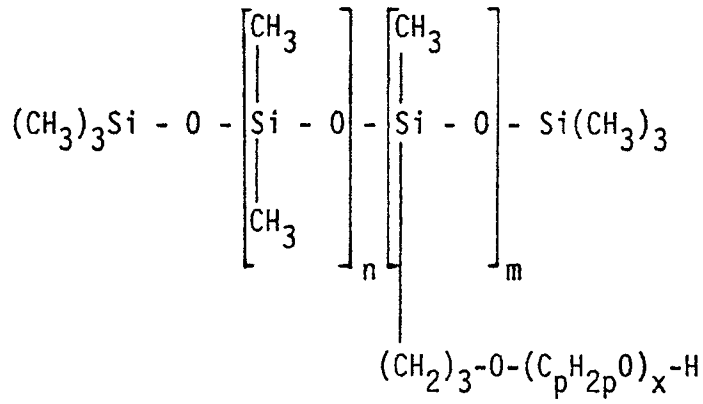

(I)

Darin bedeuten

n: 0 bis 20
m: 1 bis 5
p: 2 bis 2,6
x: 5 bis 20

wobei der Polyethergruppe $(C_pH_{2p}O)_x$ Ethylenoxid und Propylenoxid entsprechend dem Massenverhältnis 100/0 bis 35/65 zugrunde liegen.

Die Polyethergruppe weist somit die wiederkehrenden Einheiten $(C_2H_4O)$ bzw. letztere und $(C_3H_6O)$ auf. Die wiederkehrenden Einheiten können in statistischer Verteilung oder als Bausteine von Blöcken unterschiedlicher Zusammensetzung vorliegen.

Eine weitere bevorzugte Schmelzkleberpaste enthält als Silikontensid ein ionisches Polymethylsiloxan, das wenigstens eine ionische Gruppe aufweist. Die ionische Gruppe kann kationisch, anionisch oder amphoter (Betainstruktur) sein. Das ionische Polymethylsiloxan entspricht vorzugsweise der allgemeinen Formel II.

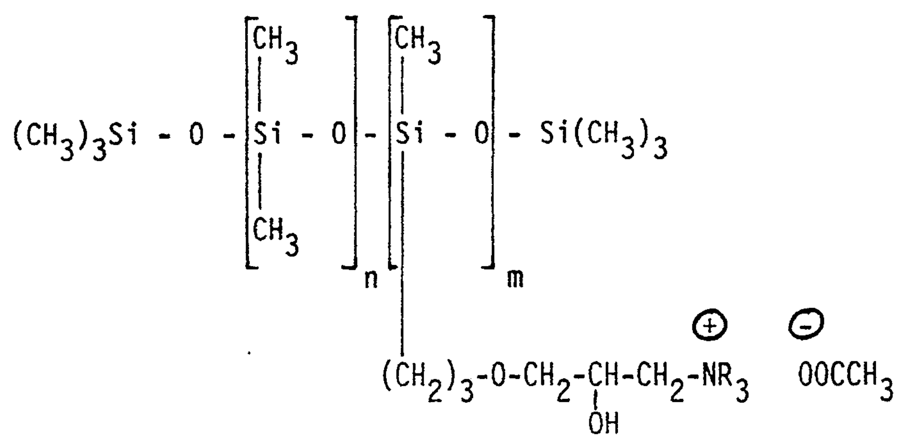

(II)

Darin bedeuten

n: 0 bis 30
m: 1 bis 10
R: $C_1$- bis $C_{18}$-Alkyl

Die Polymethylsiloxane können sowohl Polyethergruppen als auch ionische Gruppen aufweisen, welche im Hinblick auf die Siloxankette seitenständig und/oder endständig vorliegen können. Die Polymethylsiloxane sind bekannt [siehe beispielsweise H.-J. Kollmeier et al in der Broschüre "Goldschmidt informiert" der Th. Goldschmidt AG, Essen, 63 (1984), Heft 4].

Die pulverförmigen Thermoplaste haben in der Regel eine Korngröße von ≦ 80 µm (Feinstpulver).

Übliche Hilfsmittel sind beispielsweise Verdicker, wie das Natrium- oder Ammoniumsalz der Poly(meth)-acrylsäuren; Dispergatoren, wie Diurethane, ethoxylierte Fettsäuren und ethoxylierte Fettalkohole; Weichmacher, wie (N-Alkyl)-toluolsulfonamide und (N-Alkyl)-benzolsulfonamide;und Hilfsmittel zur Verbesserung der Druckeigenschaften, wie Polyethylenoxide.

Zur Verbesserung der Wasserlöslichkeit des Silikontensids kann ein organisches Lösemittel, wie beispielsweise 1,2-Propylenglykol, zugesetzt werden.

Der Thermoplast wird in der Lösung der Hilfsmittel und des Silikontensids dispergiert. Die so erhaltene Schmelzkleberpaste wird in einer Pastenpunktanlage auf die textilen Einlagen übertragen.

Die Erfindung wird durch die folgenden Beispiele erläutert. Darin bedeuten Teile Massenteile. Die nicht erfindungsgemäßen Vergleichsbeispiele werden mit großen Buchstaben bezeichnet.

In den Beispielen wurden die folgenden pulverförmigen Thermoplaste mit einer Korngröße von ≦ 80 µm eingesetzt.

I. Polyester aus 85 Mol-% Terephthalsäure und 15 Mol-% Isophthalsäure, bezogen auf die gesamte Dicarbonsäure, und 50 Mol-% Butandiol-1,4 und 50 Mol-% Hexandiol-1,6, bezogen auf das gesamte Diol.

II. Polyester aus 76 Mol-% Terephthalsäure und 24 Mol-% Isophthalsäure, bezogen auf die gesamte Dicarbonsäure, und 36 Mol-% Butandiol-1,4 und 64 Mol-% Hexandiol-1,6, bezogen auf das gesamte Diol.

III. Gemisch aus 50 Massen-% des Polyesters I und 50 Massen-% des Polyesters II.

In den Beispielen der Erfindung wurden die folgenden Silikontenside eingesetzt.

NI: nichtionisches Polymethylsiloxan entsprechend der Formel I, mit n = 0; m = 1 (Trisiloxan); x = 13; Massenverhältnis Ethylenoxid/Propylenoxid in der Polyethergruppe = 80/20; d. h. 1 Mol des Polymethylsiloxans liegen ca. 11 Mol Ethylenoxid und ca. 2 Mol Propylenoxid zugrunde. Die Polyethergruppe $(C_pH_{2p}O)_x$ weist demnach ein Molekulargewicht von ca. 600 auf. p weist den Wert 2,14 auf.
Oberflächenspannung (1 Massen-% in $H_2O$): 23 mN $m^{-1}$

Ka: kationisches Polymethylsiloxan entsprechend der Formel II, mit n = 6; m = 2.

Kb: wie Ka, jedoch mit n = 26

Die Silikontenside Ka und Kb wurden als 50-massenprozentige Lösungen in 1,2-Propylenglykol eingesetzt.

Beispiele 1 bis 8 und A bis C

Herstellung der Schmelzkleberpasten 1 bis 8 und A bis C

Zu 1250 Teilen Wasser wurden unter Rühren 30 Teile des Natriumsalzes einer Polyacrylsäure, 400 Teile eines Diurethan-Dispergators, 400 Teile eines Gemisches aus dem Ammoniumsalz einer Amidocarbonsäure und eines N-substituierten Fettsäureamids, 120 Teile Benzolsulfonsäure-2-hydroxypropylamid, 140 Teile Benzolsulfonsäure-N-butylamid und 60 Teile Polyurethanacrylat gegeben. Zur so erhaltenen, homogenen Lösung wurden im Falle der erfindungsgemäßen Beispiele 1 bis 8 die in der folgenden Tabelle angegebenen Teile des Silikontensids des angegebenen Typs gegeben. Danach wurden 1300 Teile eines pulverförmigen Thermoplasten des in der Tabelle angegebenen Typs hinzugegeben und dispergiert. Die Schmelzkleberpaste wurde schließlich durch Zugabe von 50 Teilen eines hochmolekularen Polyethylenoxids fertig gestellt.

Anwendungstechnische Prüfung der Schmelzkleberpasten 1 bis 8 und A bis C

Die oben erhaltenen Schmelzkleberpasten wurden in einer üblichen Pastenpunktanlage auf die aus einem Polyamid/Polyester-Vlies bestehenden Einlagen aufgetragen. Die Beschichtungen wurden in einem Ofen bei einer Umlufttemperatur von 130 °C getrocknet und gesintert. Das Auftragsgewicht betrug 10 ± 1 g $m^{-2}$.

Die erhaltenen textilen Fixiereinlagen wurden in 10 cm breite Streifen geschnitten. Jeweils zwei Streifen wurden mit der unbeschichteten Seite aufeinandergelegt. Die beschichtete Seite wurde jeweils mit einem 10 cm breiten Streifen eines üblichen Oberstoffs abgedeckt. Das so erhaltene Innensandwich wurde in einer Fixierpresse bei 125 bzw. 135 °C und bei einem Preßdruck von 35 N/$cm^2$ verklebt. Nach dem Erkalten wurde zur Charakterisierung der Rückschlagfestigkeit die Trennkraft zur Trennung der beiden Fixiereinlagen des Innensandwich bestimmt. Zur Beurteilung der Haftung zwischen Oberstoff und Fixiereinlage wurde

versucht, die Trennkraft zur Trennung von Oberstoff und Fixiereinlage zu bestimmen. Dabei wurden die in der Tabelle angegebenen Ergebnisse erhalten.

Tabelle

| Beispiel | Silikontensid Typ | Silikontensid Teile | Thermoplast | Rückschlag nach Fixierung bei 125 °C [N/ 10 cm] | Rückschlag nach Fixierung bei 135 °C [N/ 10 cm] | Haftung nach Fixierung bei 125 ° *) | Haftung nach Fixierung bei 135 ° *) |
|---|---|---|---|---|---|---|---|
| 1 | NI | 30 | I | 0,2 | 0,7 | gut | gut |
| 2 | NI | 30 | II | 0,4 | 0,6 | gut | gut |
| 3 | NI | 30 | III | 0,5 | 0,7 | gut | gut |
| 4 | Ka | 30 | III | 0,7 | 1,4 | gut | gut |
| 5 | Ka | 60 | III | 0,5 | 1,2 | gut | gut |
| 6 | Ka | 60 | II | 0,5 | 1,5 | gut | gut |
| 7 | Kb | 60 | I | 0,6 | 1,5 | gut | gut |
| 8 | Kb | 60 | III | 0,5 | 1,2 | gut | gut |
| A | - | - | I | 3,0 | 4,5 | gut | gut |
| B | - | - | II | 6,0 | 6,0 | gut | gut |
| C | - | - | III | 3,0 | 4,4 | gut | gut |

*) Beim Versuch, die Trennkraft zur Trennung von Oberstoff und Fixiereinlage zu bestimmen, wurde stets das Einlagevlies zerstört. Die Trennkraft war also höher als die Reißfestigkeit des Einlagevlieses.

Es ist festzustellen, daß mit den erfindungsgemäßen Schmelzkleberpasten 1 bis 8 eine deutlich verbesserte Rückschlagfestigkeit bei guter Haftung erreicht wird als mit den nicht erfindungsgemäßen Schmelzkleberpasten A bis C.

**Patentansprüche**

1. Schmelzkleberpaste, bestehend aus einem pulverförmigen, für Schmelzkleberpasten geeigneten Thermoplasten, Wasser und üblichen Hilfsmitteln,
   dadurch gekennzeichnet,
   daß sie, bezogen auf den Thermoplasten, 0,5 bis 10 Massen-% eines bei Raumtemperatur wasserlöslichen oder in Wasser dispergierbaren Silikontensids aus der Gruppe der organomodifizierten Polymethylsiloxane enthält.

2. Schmelzkleberpaste nach Anspruch 1, dadurch gekennzeichnet, daß sie als Silikontensid ein nichtionisches Polymethylsiloxan, das wenigstens eine, auf Ethylenoxid oder Ethylenoxid/Propylenoxid basierende Polyethergruppe aufweist, enthält.

3. Schmelzkleberpaste nach Anspruch 2, dadurch gekennzeichnet, daß sie als Silikontensid ein bei Raumtemperatur wasserlösliches Polymethylsiloxan der folgenden allgemeinen Formel I enthält:

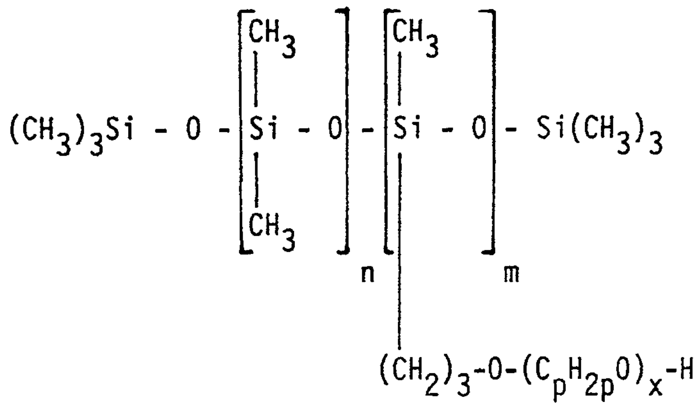

(I)

darin bedeuten

n: 0 bis 20
m: 1 bis 5
p: 2 bis 2,6
x: 5 bis 20

wobei der Polyethergruppe $(C_pH_{2p}O)_x$ Ethylenoxid und Propylenoxid entsprechend dem Massenverhältnis 100/0 bis 35/65 zugrunde liegen.

4. Schmelzkleberpaste nach Anspruch 1, dadurch gekennzeichnet, daß sie als Silikontensid ein ionisches Polymethylsiloxan, das wenigstens eine ionische Gruppe aufweist, enthält.

5. Schmelzkleberpaste nach Anspruch 4, dadurch gekennzeichnet, daß sie als Silikontensid ein Polymethylsiloxan der folgenden allgemeinen Formel II enthält:

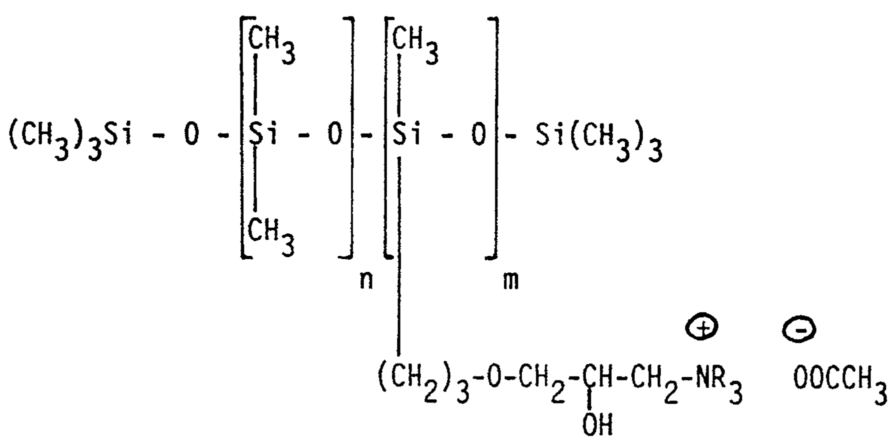

(II)

darin bedeuten

n: 0 bis 30

m: 1 bis 10

R: $C_1$- bis $C_{18}$-Alkyl

**6.** Verwendung der Schmelzkleberpaste nach einem der Ansprüche 1 bis 5 zur Herstellung von textilen Fixiereinlagen nach dem Pastenpunktverfahren.